# EUROPEAN PATENT SPECIFICATION

(11) **EP 2 627 529 B1**
(45) Date of publication and mention of the grant of the patent: **12.03.2014**
(21) Application number: 11785075.0
(22) Date of filing: 13.10.2011
(51) Int. Cl.: B60K 1/00, B60K 17/12, H02K 7/116, F16H 57/04, H02K 7/00

(54) **ELECTRIC VEHICLE DRIVE SYSTEM**
ANTRIEBSSYSTEM FÜR EIN ELEKTROFAHRZEUG
SYSTÈME DE PROPULSION DE VÉHICULE ÉLECTRIQUE

(30) Priority: 14.10.2010 JP 2010231183
(43) Date of publication of application: 21.08.2013
(73) Proprietor: TOYOTA JIDOSHA KABUSHIKI KAISHA, Toyota-shi, Aichi-ken, 471-8571 (JP)
(72) Inventor: DODO, Kohei c/o TOYOTA JIDOSHA KABUSHIKI KAISHA, Toyota-shi, Aichi-ken, 471-8571 (JP); SAKAI, Takaaki c/o TOYOTA JIDOSHA KABUSHIKI KAISHA, Toyota-shi, Aichi-ken, 471-8571 (JP)
(74) Representative: Kuhnen & Wacker
(86) International application number: PCT/IB2011/002396
(87) International publication number: WO 2012/049557

(56) References cited:
- EP-A1- 0 587 389
- US-A1- 2006 219 449
- US-A1- 2009 127 954

## Description

### BACKGROUND OF THE INVENTION

### 1. Field of the Invention

The invention relates to an electric vehicle drive system, and more particularly, to art for suppressing oil blow from a breather device.

### 2. Description of Related Art

There is a known electric vehicle drive system that includes an electric motor and a transmission device which transmits power from the electric motor to an axle. The electric motor is accommodated within a motor chamber of a case, and the transmission device is accommodated within a gear chamber that is provided inside the case and separated from the motor chamber by a partition. Examples of such a drive system are described in Japanese Patent Application No. 09-48250 (JP-A-09-48250) and Japanese Patent Application Publication No. 2009-121553 (JP-A-2009-121553, see also US 2009/0127954 A, in accordance with the preamble of claim 1).

JP-A-09-48250 describes a power train for an electric vehicle, which has a communication hole formed in an output shaft support wall that rotatably supports one end portion of an output shaft of the electric motor. The communication hole is formed in order to provide communication between the motor chamber and a space that is formed between the output shaft support wall and an input shaft support wall that rotatably supports an input shaft of a planetary gear reducer that is used as the transmission device mentioned above.

JP-A-2009-121553 describes a motor-type power device that includes a first breather passage and a second breather passage. The first breather passage is formed in the partition to provide communication between the gear chamber and a first chamber that is a part of the motor chamber and is proximal to the gear chamber. The second breather passage is formed in an outer wall of the motor chamber to provide communication between the gear chamber and a second chamber that is another part of the motor chamber and is distal to the gear chamber.

In the electric vehicle drive systems according to the related art described above, oil accumulates at bottom portions of the motor chamber and the gear chamber. The oil is suctioned by an oil pump and supplied to the electric motor and the transmission device so as to lubricate and cool the electric motor and the transmission device. However, the following inconvenience sometimes occurs. Heat dissipated from the electric motor when it is rotating at high speed increases the oil temperature within the motor chamber. In addition, for example, if an electric vehicle drive system is tilted such that the motor chamber is positioned below the gear chamber, a rotor of the electric motor is immersed in the oil within the motor chamber and the rotor agitates the oil within the motor chamber. As a result, the oil level within the motor chamber or the level of oil bubbles generated from the oil agitation is raised. Therefore, when a breather device provided at an upper portion of the motor chamber releases the pressure inside the motor chamber into the atmosphere, so-called oil blow, that is, a phenomenon where oil is blown from the breather device may occur.

As a countermeasure against oil blow, the communication hole is formed in the partition between the motor chamber and the gear chamber to provide communication between the motor chamber and the gear chamber. It is considered that, due to formation of the communication hole, the oil blow from the breather device is suppressed by allowing the oil within the motor chamber to flow to the gear chamber through the communication hole, while suppressing an increase in the pressure within the motor chamber by uniforming the internal pressures of the motor chamber and the gear chamber. However, in reality, air and oil are not prone to move through the communication hole, and this countermeasure is insufficient for suppressing oil blow from the breather device.

### SUMMARY OF THE INVENTION

The invention provides an electric vehicle drive system that is configured to suppress oil blow from a breather device that releases a pressure inside a motor chamber into the atmosphere.

An aspect of the invention relates to an electric vehicle drive system in which an electric motor is accommodated within a motor chamber that is formed so as to be separated from a gear chamber by a partition within a case, and a transmission device that transmits power from the electric motor to an axle is accommodated within the gear chamber. The electric vehicle drive system includes a rotation member that is disposed apart from the partition with a predetermined clearance within the gear chamber, and connected to an output shaft of the electric motor. The partition has a first communication hole that is formed at a position radially inward of a most outward point of the rotation member in a radial direction, and that provides communication between the gear chamber and the motor chamber.

In the electric vehicle drive system, the rotation member is disposed apart from the partition with the predetermined clearance within the gear chamber and connected to the output shaft of the electric motor, and the partition has the first communication hole that is formed at the position radially inward of the most outward point of the rotation member in the radial direction, and that provides communication between the gear chamber and the motor chamber. Therefore, when the rotation member is rotated in accordance with the rotation of the electric motor, within the gear chamber, the pressure decreases inside the clearance between the,rotation member and the partition, which generates a flow of air heading from the motor chamber toward the gear chamber through the first communication hole. Therefore, even if heat dissipated from the electric motor causes the oil temperature within the motor chamber to rise and oil agitation by the electric motor causes the oil level within the motor chamber to rise, air flowing from the motor chamber to the gear chamber as described above suppresses an imbalance between the internal pressures of the two chambers, which suppresses a pressure increase within the motor chamber. In addition, the oil within the motor chamber, e.g., oil bubbles generated by agitation, moves to the gear chamber through the first communication hole, which lowers the oil level or the level of oil bubbles in the motor chamber. It is thus possible to suppress oil blow from the breather device that releases the internal pressure of the motor chamber into the atmosphere.

In the electric vehicle drive system described above, the partition has a second communication hole that is formed at a position radially outward of the most outward point of the rotation member in the radial direction, and that provides communication between the gear chamber and the motor chamber. The first communication hole may be formed at a position ahead of the second communication hole in a rotation direction of the rotation member.

In the electric vehicle drive system, the partition has the second communication hole that is formed at the position radially outward of the most outward point of the rotation member in the radial direction, and that provides communication between the gear chamber and the motor chamber. Further, the first communication hole may be formed at the position ahead of the second communication hole in the rotation direction of the rotation member. Therefore, if the oil within the motor chamber moves to the gear chamber through the first communication hole due to air flowing from the motor chamber to the gear chamber through the first communication hole, the oil that has moved to the gear chamber is thrown from the first communication hole toward the forward side in the rotation direction of the rotation member, that is, in a direction away from the second communication hole. It is thus possible to suppress a return of the oil, which has moved to the gear chamber, to the motor chamber through the second communication hole.

In the electric vehicle drive system described above, the partition has a second communication hole that is formed at a position radially outward of the most outward point of the rotation member in the radial direction, and that provides communication between the gear chamber and the motor chamber; and an oil block member that is provided at a position radially outward of the rotation member so as to project within the gear chamber from a position radially inward of the second communication hole, and that blocks oil that is thrown radially outward of the rotation member due to a centrifugal force of the rotation member that is rotating and heading toward the second communication hole, before the oil reaches the second communication hole.

In the electric vehicle drive system, the partition has the second communication hole that is formed at the position radially outward of the most outward point of the rotation member in the radial direction, and that provides communication between the gear chamber and the motor chamber; and the oil block member that is provided at the position radially outward of the rotation member so as to project within the gear chamber from the position radially inward of the second communication hole, and that blocks oil that is thrown radially outward of the rotation member due to a centrifugal force of the rotation member that is rotating and heading toward the second communication hole, before the oil reaches the second communication hole. It is thus possible to suppress the movement of the oil within the gear chamber that is thrown up by the rotation member to the motor chamber through the second communication hole, thereby suppressing a rise in the oil level of the motor chamber.

In the electric vehicle drive system described above, the second communication hole may be formed at a position radially outward of a coil end of a stator of the electric motor. Since the second communication hole is formed at the position radially outward of the coil end of the stator of the electric motor in this electric vehicle drive system, the coil end does not interfere with the flow of air heading from the gear chamber to the motor chamber through the second communication hole.

The electric vehicle drive system described above may further include a breather device that, when a value of pressure within the motor chamber is equal to or greater than a predetermined value, opens the motor chamber to the atmosphere.

In the electric vehicle drive system, since the breather device is provided that opens the motor chamber to the atmosphere when the value of pressure within the motor chamber is equal to or greater than the predetermined value, a pressure increase within the motor chamber to the predetermined value or higher is suppressed.

The electric vehicle drive system described above may be a single shaft type of drive system in which the electric motor and the transmission device that transmit power from a drive power source of the electric vehicle drive system to an output member of the electric vehicle drive system are each disposed on a common shaft center.

The electric vehicle drive system is the single shaft type of drive system in which the electric motor and the transmission device that transmit power from the drive power source of the electric vehicle drive system to the output member are each disposed on the common shaft center. Therefore, oil blow is suitably suppressed even when a breather chamber for separating air and oil from each other is not provided between the motor chamber and the breather device within the case of the compactly structured, single shaft type of electric vehicle drive system.

In the electric vehicle drive system described above, the rotation member may be provided on the output shaft of the electric motor so as to be rotatable together with the output shaft.

Therefore, the rotational speed of the rotation member is a relatively high speed that is a rotational speed that has not been reduced by the transmission device. Thus, when the rotation member is rotated in accordance with the rotation of the electric motor, there is a relatively large drop in the pressure inside the clearance between the rotation member and the partition, which generates a sufficient flow of air for moving the oil within the motor chamber to the gear chamber through the first communication hole.

In the electric vehicle drive system described above, the predetermined clearance, a rotational speed of the rotation member, a clearance between the first communication hole and a rotating body that is connected to the output shaft of the electric motor within the motor chamber, and a rotational speed of the rotating body may be set such that oil moves from the motor chamber into the gear chamber.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic diagram that shows a configuration of a drive train of an electric vehicle that includes an electric vehicle drive system according to an embodiment of the invention;
FIG. 2 is a skeleton diagram that explains a configuration of the electric vehicle drive system in FIG. 1;
FIG. 3 is a longitudinal cross-sectional view of the electric vehicle drive system in FIG. 1; and
FIG. 4 is a sectional view that shows a cylindrical case taken along the line IV-IV in FIG. 3.

### DETAILED DESCRIPTION OF EMBODIMENTS

Hereinafter, an embodiment of the invention will be described in detail with reference to the drawings. Note that, with regard to the embodiment below, each part in the drawings may be simplified or deformed and each part is not necessarily drawn with precision in terms of dimensional ratio, shape, and the like.

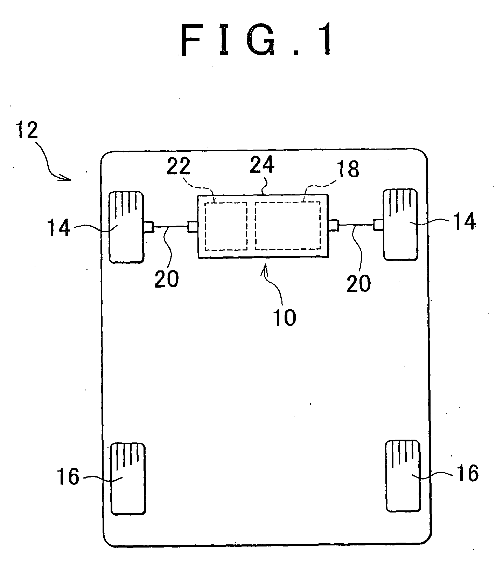

FIG. 1 is a schematic diagram that shows a configuration of a drive train of an electric vehicle 12 that includes an electric vehicle drive system 10 according to the embodiment of the invention. As shown in FIG. 1, the electric vehicle 12 includes the electric vehicle drive system 10; a pair of left and right driving wheels 14 that are rotated and driven by the electric vehicle drive system 10; and a pair of left and right driven wheels 16.

The electric vehicle drive system 10 is configured to include an electric motor 18 that functions as a drive power source of the electric vehicle 12; a transmission device 22 that transmits power from the electric motor 18 to the pair of driving wheels 14 through a pair of left and right axles 20; and a transaxle case 24 that accommodates the electric motor 18 and the transmission device 22, and is fixed to a vehicle body.

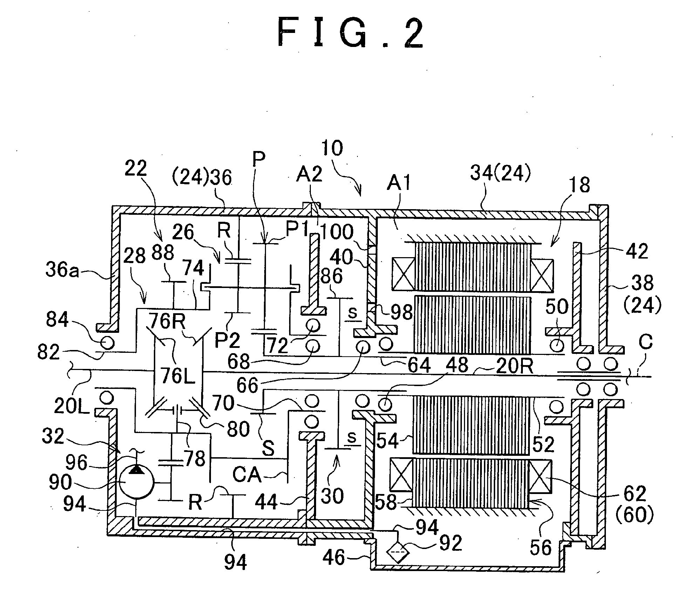

FIG. 2 is a skeleton diagram that explains a configuration of the electric vehicle drive system 10. As shown in FIG. 2, the electric vehicle drive system 10 includes the electric motor 18; a reducer 26 and a differential gear unit 28 that constitute the transmission device 22; a parking device 30 that holds the electric motor 18 and the transmission device 22 stationary such that the electric motor 18 and the transmission device 22 are not allowed to rotate in order to park the electric vehicle 12; and a lubricating device 32 that supplies oil to lubrication regions of each device above. The electric vehicle drive system 10 is a single shaft type of drive system in which a plurality of devices that transmits power from a drive power source to an output member, i.e., the electric motor 18, the reducer 26, and the differential gear unit 28, are each disposed on a common shaft center C.

The transaxle case 24 is a three-sectioned type of case formed from a cylindrical case 34 that mainly accommodates the electric motor 18 and the parking device 30; a bottomed cylindrical case 36 that mainly accommodates the reducer 26 and the differential gear unit 28, and is fixed to one end portion of the cylindrical case 34 such that an open end portion of the bottomed cylindrical case 36 covers an opening of the one end portion of the cylindrical case 34; and a disc-shaped case cover 38 that is fixed to the other end portion of the cylindrical case 34 so as to cover an opening of the other end portion of the cylindrical case 34.

The cylindrical case 34 has an annular partition 40 that is formed integrally with and projects radially inward from an inner peripheral surface of the one end portion of the cylindrical case 34. The partition 40 supports one end portion of the electric motor 18, and functions as a wall that divides an inner space of the transaxle case 24 into a motor chamber A1 that accommodates the electric motor 18, and a gear chamber A2 that accommodates the transmission device 22 and the parking device 30. The motor chamber A1 mainly accommodates the electric motor 18, and the gear chamber A2 mainly accommodates the parking device 30, the reducer 26, and the differential gear unit 28. In addition, an opening (not shown) is formed in a lower portion of the partition 40 in order to provide communication between the motor chamber A1 and the gear chamber A2, thereby uniforming the oil levels of the chambers.

An annular first support wall 42 is provided at the other end portion of the cylindrical case 34. An outer peripheral portion of the first support wall 42 is fixed to the other end portion of the cylindrical case 34. The first support wall 42 supports the other end portion of the electric motor 18 and one axle 20R.

An annular second support wall 44 is provided at the opening end portion of the bottomed cylindrical case 36. An outer peripheral portion of the second support wall 44 is fixed to the opening end portion of the bottomed cylindrical case 36. The second support wall 44 supports one end portion of the reducer 26.

An oil pan 46 is fixed to a lower portion of the cylindrical case 34 so as to cover an opening formed in the lower portion. The oil pan 46 functions as an oil catcher that catches the oil circulating within the transaxle case 24 when such oil flows back to the lower portion of the cylindrical case 34.

The electric motor 18 is configured to include a rotation shaft 52, a rotor 54, and a stator 56. At positions radially outward of the one axle 20R, one end portion of the rotation shaft 52 is rotatably supported by the partition 40 via a first bearing 48, and the other end portion of the rotation shaft 52 is rotatably supported by the first support wall 42 via a second bearing 50. At a position radially outward of the rotation shaft 52, an inner peripheral portion of the rotor 54 is fixed to the rotation shaft 52 so that the rotor 54 is rotatable together with the rotation shaft 52. At a position radially outward of the rotor 54, an outer peripheral portion of the stator 56 is securely fixed to the cylindrical case 34. The rotation shaft 52 functions as an output shaft of the electric motor 18.

The rotor 54 is formed by laminating a plurality of annular steel plates in the direction of the shaft center C. The rotor 54 may function as a rotating body according to the invention.

The stator 56 is formed from a core portion 58, which is formed by laminating a plurality of annular steel plates in the direction of the shaft center C, and a plurality of coils 60. Each coil 60 is annularly wound around a portion of the core portion 58 in the circumferential direction, the portion being a radially inner side portion of the core portion 58. The coils 60 are arranged consecutively at intervals in the circumferential direction. Coil ends 62 shown in FIG. 2 are portions of each coil 60 that protrude from the stator 56 on both sides of the stator 56 in the direction of the shaft center C.

The one end portion of the rotation shaft 52 is connected through, for example, spline engagement, to one end portion of a cylindrical transmission member 64 that functions as an input shaft of the transmission device 22 such that relative rotation between the rotation shaft 52 and the cylindrical transmission member 64 is not allowed. The cylindrical transmission member 64 is rotatably supported at one end portion by the partition 40 via a third bearing 66, and rotatably supported at the other end by the second support wall 44 via a fourth bearing 68.

The electric motor 18 configured as described above is connected to an electrical storage device such as a battery or capacitor via an inverter (not shown). An output torque of the electric motor 18 is increased or decreased by controlling the inverter to adjust a drive current supplied to the coils 60.

The reducer 26 is formed from a planetary gear unit that is provided on the opposite side of the partition 40 from the electric motor 18, at a position radially outward of the one axle 20R. The reducer 26 includes a sun gear S, a stepped pinion P, a carrier CA, and a ring gear R. The sun gear S is fitted through, for example, spline engagement, to the other end portion of the cylindrical transmission member 64, that is, to an axial end portion of the cylindrical transmission member 64 on a side opposite from the electric motor 18. The stepped pinion P is meshed at a large diameter portion P1 with the sun gear S. The carrier CA supports the stepped pinion P such that the stepped pinion P is allowed to rotate about its axis and revolve around the sun gear S. The ring gear R that is provided concentrically with the sun gear S, fixed to an inner peripheral portion of the bottomed cylindrical case 36 such that relative rotation between the ring gear R and the bottomed cylindrical case 46 is not allowed, and meshed with a small diameter portion P2 of the stepped pinion P.

The carrier CA includes a cylindrical end portion 70 that is provided at a position radially outward of the fourth bearing 68 so as to project toward the parking device 30. The carrier CA is supported so as to be rotatable about the shaft center C by the second support wall 44 via a fifth bearing 72 that is provided at a position radially outward of the cylindrical end portion 70. In addition, the carrier CA functions as an output member of the reducer 26, and is connected to a differential case 74 of the differential gear unit 28 disposed on the opposite side of the reducer 26 from the parking device 30.

The reducer 26 configured as described above reduces the speed of the rotation transmitted from the electric motor 18 via the cylindrical transmission member 64, and then outputs the rotation to the differential gear unit 28.

The differential gear unit 28 includes the differential case 74 that is supported so as to be rotatable around the shaft center C; a pair of side gears 76 that face each other in the direction of the shaft center C and are accommodated within the differential case 74 so as to be rotatable around the shaft center C; and three pinions 80 that are disposed between the side gears 76 and at regular intervals in the circumferential direction around the shaft center C, and accommodated within the differential case 74 while meshing with the side gears 76. The three pinions 80 are rotatably supported by three pinion shafts 78 each of which extends in the radial direction and is fixed to the differential case 74.

The differential case 74 has a cylindrical end portion 82 that is provided so as to project in a direction away from the carrier CA. The differential case 74 is supported so as to be rotatable around the shaft center C by a bottom wall portion 36a of the bottomed cylindrical case 36 via a sixth bearing 84 provided at a position radially outward of the cylindrical end portion 82.

One side gear 76R that is among the pair of side gears 76 and arranged on the cylindrical transmission member 64 side is connected to the one axle 20R through, for example, spline engagement such that relative rotation between the side gear 76R and the axle 20R is not allowed. The other side gear 76L among the pair of side gears 76 is connected to the other axle 20L through, for example, spline engagement such that relative rotation between the side gear 76L and the axle 20L is not allowed.

The differential gear unit 28 configured as described above transmits power that is transmitted from the electric motor 18 via the reducer 26 to each of the pair of axles 20 while allowing the pair of axles 20 to rotate at different rotational speeds.

The parking device 30 includes a parking gear 86 and a parking lock pole (not shown). The parking gear 86 is provided within the gear chamber A2 at a position between the partition 40 and the second support wall 44, and is coupled to the cylindrical transmission member 64 so as to project radially outward from an outer peripheral surface of the cylindrical transmission member 64. The parking lock pole is supported by a non-rotating member such as the cylindrical case 34 so as to be pivotable about a pivot point. When the parking lock pole pivots in one direction about the pivot point, the parking lock pole is engaged with the parking gear 86. When the parking lock pole pivots in the other direction about the pivot point, the parking lock pole is disengagd from the parking gear 86. The parking gear 86 may function as a rotation member according to the invention. The parking gear 86 is disposed with a predetermined clearance s left between the parking gear 86 and the partition 40, and connected via the cylindrical transmission member 64 to the rotation shaft 52 that serves as the output shaft of the electric motor 18. The predetermined clearance (interval) s, a rotational speed of the parking gear 86, a clearance between a first communication hole 98 and the rotor 54 within the motor chamber A1, and a rotational speed of the rotor 54 are set such that oil moves from the motor chamber A1 into the gear chamber A2.

In the parking device 30 configured as described above, the parking lock pole is pivoted in the one direction about the pivot center in response to an output of a parking command so as to be engaged with the parking gear 86. Thus, the parking gear 86 and a rotating body connected to the parking gear 86 are held stationary so that the parking gear 86 and the rotating body are not allowed to rotate. Accordingly, the cylindrical transmission member 64, the electric motor 18, the reducer 26, the differential gear unit 28, and the like are held stationary so as to be prohibited to rotate about the shaft center C.

The lubricating device 32 includes a commonly known oil pump 90, oil intake passage 94, and an oil discharge passage 96. The oil pump 90 is fixed to the bottom wall portion 36a of the bottomed cylindrical case 36, and rotated and driven by a drive gear 88 that is fixedly provided on an outer peripheral surface of the differential case 74. The oil intake passage 94 guides oil accumulated in the oil pan 46 to the oil pump 90 through an oil strainer 92. The oil discharge passage 96 guides oil pressurized by and supplied from the oil pump 90 to various lubrication regions, for example, gear meshed portions and bearings of the electric motor 18, the reducer 26, the differential gear unit 28, and the like. Note that FIG. 2 shows only a portion of the oil discharge passage 96.

When the oil pump 90 is rotated and driven by the rotation of the drive gear 88 that is caused in accordance with the rotation of the electric motor 18, the lubricating device 32 configured as described above supplies oil to various lubrication regions, for example, gear meshed portions and bearings of the electric motor 18, the reducer 26, and the differential gear unit 28 to lubricate the lubrication regions. Note that the oil supplied from the lubricating device 32 to the various devices draws heat away from the devices to thereby cool them. Therefore, the lubricating device 32 functions also as a cooling device.

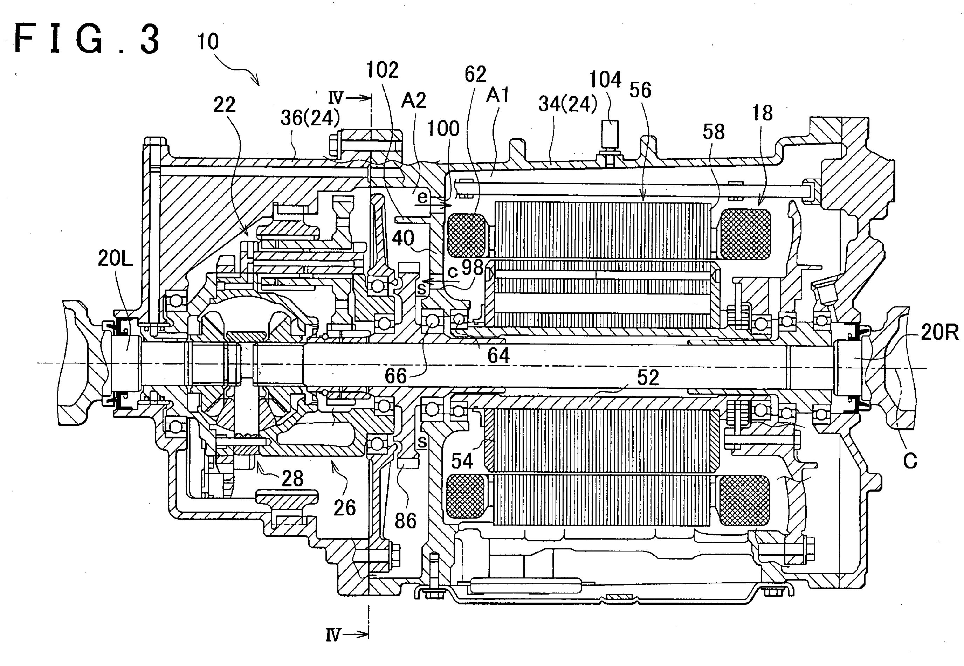

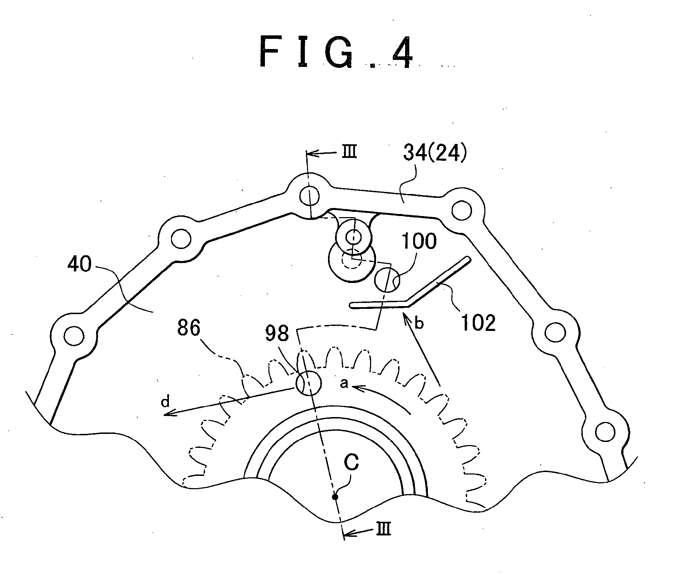

FIG. 3 is a longitudinal cross-sectional view of the electric vehicle drive system 10. FIG. 4 is a sectional view that shows the cylindrical case 34 taken along the line IV-IV in FIG. 3. The partition 40 in FIG. 3 is shown as a partial cross section taken along the line III-III in FIG. 4. Note that, in FIG. 4, the parking gear 86 is indicated by a two-dotted broken line for convenience. The rotation direction of the parking gear 86 is indicated by an arrow a. The partition 40 of the cylindrical case 34 will be described in further detail below with reference to FIGS. 3 and 4.

The partition 40 is provided between the motor chamber A1 and the gear chamber A2. A first communication hole 98 that provides communication between the motor chamber A1 and the gear chamber A2 is formed in the partition 40. The first communication hole 98 is formed at a position radially inward of the external teeth of the parking gear 86 (that is, the first communication hole 98 is formed at a position radially inward of a most outward point of the parking gear 86 in a radial direction), preferably, at a position radially inward of the troughs of the external teeth, and above the third bearing 66 that faces a side surface of parking gear 86 with the clearance s left therebetween.

A second communication hole 100 (see FIG. 4) that provides communication between the motor chamber A1 and the gear chamber A2 is formed in the partition 40. The second communication hole 100 is formed at a position radially outward of the first communication hole 98, radially outward of the coil end 62 of the stator 56 of the electric motor 18, and behind the first communication hole 98 in the rotation direction of the parking gear 86. The first communication hole 98 is formed ahead of the second communication hole 100 in the rotation direction (in a direction a) of the parking gear 86 (see FIG. 4).

The partition 40 has an oil block member 102 that is formed integrally with the partition 40, and projects within the gear chamber A2 from a position radially inward of the second communication hole 100 and a position behind the second communication hole 100 in the rotation direction of the parking gear 86. The oil block member 102 blocks the oil that heads toward the second communication hole 100 as shown by an arrow b in FIG. 4 after, for example, being thrown up by the parking gear 86 and thrown radially outward of the parking gear 86 due to a centrifugal force, before the oil reaches the second communication hole 100. In addition, the oil block member 102 gently inclines with respect to the horizontal plane such that oil adhering to an upper surface of the oil block member 102 easily and freely falls downward.

As shown in FIG. 3, a commonly known breather device 104 is provided on an upper portion of the cylindrical case 34. If a value of pressure within the motor chamber A1 is equal to or greater than a predetermined value set in advance, the breather device 104 opens the motor chamber A1 to the atmosphere.

In the electric vehicle drive system 10 configured as described above, when the rotor 54 of the electric motor 18 is rotated, the parking gear 86 is also rotated at the same rotational speed as the rotor 54. When the parking gear 86 rotates, air present radially outward of the parking gear 86 and air inside the clearance s between the parking gear 86 and the partition 40 are thrown radially outward due to a centrifugal force. As a consequence, in the gear chamber A2, the pressure is decreased inside the clearance s. Thus, as shown by an arrow c in FIG. 3, air flows from the motor chamber A1, which has a pressure higher than that of the clearance s, to the gear chamber A2 through the first communication hole 98. The pressure inside the clearance s decreases by a larger amount as the rotational speed of the parking gear 86 becomes faster. Accordingly, the flow rate of the air that heads from the motor chamber A1 to the gear chamber A2 through the first communication hole 98 becomes greater as the pressure inside the clearance s decreases by a larger amount.

The flow of air heading from the motor chamber A1 to the gear chamber A2 through the first communication hole 98 as described above causes the oil present near the opening of the first communication hole 98 in the motor chamber A1 to move to the gear chamber A2 together with the air. The oil present near the opening of the first communication hole 98 includes, for example, oil bubbles and oil mist that are generated when the oil accumulated within the motor chamber A1 is agitated by the rotor 54 of the electric motor 18. Note that the oil bubbles and oil mist are generated, in particular, when the electric motor 18 is rotating at high speed and the rotor 54 of the electric motor 18 is immersed in the oil within the motor chamber A1, for example, because the electric vehicle drive system 10 is tilted such that the motor chamber A1 is positioned below the gear chamber A2.

The oil that has moved to the gear chamber A2 through the first communication hole 98 as described above is thrown by the parking gear 86 toward the forward side in the rotation direction of the parking gear 86, as shown by an arrow d in FIG. 4. The oil subsequently drops along an inner peripheral surface or the like of the bottomed cylindrical case 36, and accumulates at a bottom portion of the bottomed cylindrical case 36.

Here, the rotor 54 of the electric motor 18 rotates at a higher speed than the rotating body within the gear chamber A2 that is decelerated by the reducer 26. Therefore, the oil temperature and oil level of the oil within the motor chamber A1, which is more intensely agitated than the oil within the gear chamber A2 tends to rise, and oil bubbles and oil mist are generated relatively in a larger amount in the motor chamber A1 than in the gear chamber A2. However, as the rotational speed of the electric motor 18 increases, the flow rate of the air heading from the motor chamber A1 to the gear chamber A2 increases, and the amount of oil heading from the motor chamber A1 to the gear chamber A2 along with the air increases. Therefore, a rise in the oil level or the level of oil bubbles within the motor chamber A1 is suitably suppressed.

In addition, even if there is a flow of air heading from the motor chamber A1 to the gear chamber A2 through the first communication hole 98 as described above, air moves from the gear chamber A2 to the motor chamber A1 through the second communication hole 100 as shown by an arrow e in FIG. 3. Thus, the pressure inside the motor chamber A1 and the gear chamber A2 are made uniform. At such time, air heading toward the motor chamber A1 through the second communication hole 100 is supplied into the motor chamber A1 from above the coil end 62.

Oil thrown up by the parking gear 86 and thrown radially outward of the parking gear 86 due to a centrifugal force so as to head toward the second communication hole 100, as shown by the arrow b in FIG. 4, is blocked by the oil block member 102 before reaching the second communication hole 100. In addition, air mixed with oil that is discharged from the first communication hole 98 toward the parking gear 86 is thrown by the parking gear 86 toward the forward side in the rotation direction of the parking gear 86, as shown by the arrow d in FIG. 4. Thus, oil is prevented as much as possible from mixing with air heading from the gear chamber A2 to the motor chamber A1 through the second communication hole 100.

As described above, in the electric vehicle drive system 10 according to the embodiment, the parking gear (rotation member) 86 is provided within the gear chamber A2 so as to be apart from the partition 40 with the predetermined clearance s. The partition 40 has the first communication hole 98, which is formed at a position radially inward of the troughs of the external teeth of the parking gear 86 and provides communication between the motor chamber A1 and the gear chamber A2. Accordingly, when the parking gear 86 rotates as the electric motor 18 rotates, within the transaxle case 24, the pressure is decreased inside the clearance s between the parking gear 86 and the partition 40 due to an airflow sent radially outward by a centrifugal force. Air thus flows from the motor chamber A1 toward the gear chamber A2 through the first communication hole 98. Therefore, even if heat dissipated from the electric motor 18 causes the oil temperature within the motor chamber A1 to rise and oil agitation by the electric motor 18 causes the oil level within the motor chamber A1 to rise, air flowing from the motor chamber A1 to the gear chamber A2 as described above suppresses an imbalance between the internal pressures of the two chambers, which suppresses a pressure increase within the motor chamber A1. In addition, the oil within the motor chamber A1, e.g., oil bubbles generated by agitation, moves to the gear chamber A2 through the first communication hole 98, which lowers the oil level or the level of oil bubbles in the motor chamber A1. Further, the gear chamber A2 functions also as a breather chamber. It is thus possible to suppress oil blow from the breather device 104 that releases the internal pressure of the motor chamber A1 into the atmosphere.

In the electric vehicle drive system 10 according to the embodiment, the partition 40 has the second communication hole 100, which is provided at a position radially outward of the coil end 62 of the stator 56 of the electric motor 18 and provides communication between the motor chamber A1 and the gear chamber A2. The first communication hole 98 is formed at a position ahead of the second communication hole 100 in the rotation direction of the parking gear 86. Therefore, if the oil within the motor chamber A1 moves to the gear chamber A2 through the first communication hole 98 due to air flowing from the motor chamber A1 toward the gear chamber A2 through the first communication hole 98, the oil that has moved into the gear chamber A2 is thrown from the first communication hole 98 toward the forward side in the rotation direction of the parking gear 86, that is, in a direction away from the second communication hole 100. It is thus possible to suppress a return of the oil, which has moved to the gear chamber A2, to the motor chamber A1 through the second communication hole 100. In addition, the second communication hole 100 is formed at a position radially outward of the coil end 62 of the stator 56 of the electric motor 18. Therefore, the coil end 62 does not interfere with the flow of air from the gear chamber A2 toward the motor chamber A1 through the second communication hole 100.

The electric vehicle drive system 10 according to the embodiment includes the breather device 104 that opens the motor chamber A1 to the atmosphere when the value of pressure within the motor chamber A1 is equal to or greater than the predetermined value set in advance. Therefore, a pressure increase within the motor chamber A1 to the predetermined value or higher is suppressed.

In the electric vehicle drive system 10 according to the embodiment, the partition 40 has the oil block member 102, which is provided at a position radially outward of the parking gear 86 so as to project within the gear chamber A2 from a position radially inward of the second communication hole 100 and a position behind the second communication hole 100 in the rotation direction of the parking gear 86. The oil block member 102 blocks oil that is thrown radially outward of the parking gear 86 due to a centrifugal force of the rotating parking gear 86 and heading toward the second communication hole 100, before the oil reaches the second communication hole 100. It is thus possible to suppress the movement of the oil within the gear chamber A2 that is thrown up by the parking gear 86 to the motor chamber A1 through the second communication hole 100, thereby suppressing a rise in the oil level in the motor chamber A1.

The electric vehicle drive system 10 according to the embodiment is a single shaft type of drive system in which the electric motor 18, the reducer 26, and the differential gear unit 28, which transmit power from the drive power source of the electric vehicle drive system 10 to the output member of the electric vehicle drive system 10, are each disposed on the common shaft center C. Therefore, oil blow is suitably suppressed even when a breather chamber for separating air and oil from each other is not provided between the motor chamber A1 and the breather device 104 within the transaxle case 24 of the compactly structured electric vehicle drive system 10.

In the electric vehicle drive system 10 according to the embodiment, the parking gear 86 is fixed to the rotation shaft 52 that serves as the output shaft of the electric motor 18 so as to be rotatable together with the rotation shaft 52. Therefore, the rotational speed of the parking gear 86 is a relatively high speed that is a rotational speed that has not been reduced by the reducer 26. Thus, when the parking gear 86 is rotated in accordance with the rotation of the electric motor 18, there is a relatively large drop in the pressure inside the clearance s between the parking gear 86 and the partition 40, which generates a sufficient flow of air for moving the oil within the motor chamber A1 to the gear chamber A2 through the first communication hole 98.

An embodiment of the invention has been described in detail above with reference to the drawings. However, the invention is not limited to this embodiment, and may be implemented in other embodiments:

For example, the parking gear 86 is provided in the gear chamber A2 at a position apart from the partition 40 with the clearance s. However, the rotation member according to the invention is not limited to the parking gear 86, and any rotation member may be provided so long as the rotation member is connected to the electric motor 18 and rotates in accordance with the rotation of the electric motor 18. As another example, a rotation member or the like that constitutes the transmission device 22 may be provided. The rotation member described above is not limited to a gear, and may be a disc-like member. In this manner, the pressure inside the clearance s lowers due to the rotation of the electric motor 18, which generates a flow of air for moving air mixed with oil inside the motor chamber A1 into the gear chamber A2 through the first communication hole 98.

In addition, the second communication hole 100 is formed at a position radially outward of the coil end 62 of the stator 56 of the electric motor 18. However, the second communication hole 100 need not be formed at a position radially outward of the coil end 62.

The second communication hole 100 is formed at a position radially outward of the first communication hole 98. However, the second communication hole 100 need not be formed at a position radially outward of the first communication hole 98.

The first communication hole 98 is formed at a position ahead of the second communication hole 100 in the rotation direction of the parking gear 86. However, the invention is not limited to this configuration. For example, the first communication hole 98 may be formed at the same position in the circumferential direction as the second communication hole 100, or formed behind the second communication hole 100 in the rotation direction of the parking gear 86.

The oil block member 102 need not be formed.

The reducer 26 is a one-speed transmission. However, another known multi-speed transmission may be provided in place of the reducer 26.

Although the electric vehicle drive system 10 is a single shaft type of drive system, the invention is not limited to this configuration. For example, the electric vehicle drive system 10 may be a multi-shaft type of drive system in which various devices that transmit power from a drive source to an output member, or components of the various devices are provided on different shafts.

The first communication hole 98 is formed at a position radially inward of the troughs of the external teeth of the parking gear 86. However, the invention is not limited to this configuration. For example, the first communication hole 98 may be formed between the troughs and outer peripheral surfaces of the external teeth of the parking gear 86.

Note that the above description concerns merely one embodiment of the invention. Although other embodiments are not illustrated here, the invention may be implemented in various other embodiments that are achieved by making various changes and modifications based on the knowledge of a person skilled in the art without departing from the scope of the invention as defined in the claims.

## Claims

1. An electric vehicle drive system (10) in which an electric motor (18) is accommodated within a motor chamber (A1) that is separated from a gear chamber (A2) by a partition (40) within a case (24), and a transmission device (22) that transmits power from the electric motor (18) to an axle (20) is accommodated within the gear chamber (A2), comprising:
a rotation member (86) that is disposed apart from the partition (40) with a predetermined clearance (s) within the gear chamber (A2), and connected to an output shaft (52) of the electric motor (18), and being rotatable in accordance with a rotation of the electric motor (18), wherein
the partition (40) has a first communication hole (98) that is formed at a position radially inward of a most outward point of the rotation member (86) in a radial direction, and that provides communication between the gear chamber (A2) and the motor chamber (A1) in such a way that oil is movable from the motor chamber (A1) into the gear chamber (A2), **characterized in that**:
the partition (40) has a second communication hole (100) that is formed at a position radially outward of the most outward point of the rotation member (86) in the radial direction, and that provides communication between the gear chamber (A2) and the motor chamber (A1);
the partition (40) has an oil block member (102) that is provided at a position radially outward of the rotation member (86) so as to project within the gear chamber (A2) from a position radially inward of the second communication hole (100), and that blocks oil that is thrown radially outward of the rotation member (86) due to a centrifugal force of the rotation member (86) that is rotating and heading toward the second communication hole (100), before the oil reaches the second communication hole (100).

2. The electric vehicle drive system (10) according to claim 1, wherein
the first communication hole (98) is formed at a position ahead of the second communication hole (100) in a rotation direction of the rotation member (86).

3. The electric vehicle drive system (10) according to claim 2, wherein
the second communication hole (100) is formed at a position radially outward of a coil end of a stator (56) of the electric motor (18).

4. The electric vehicle drive system (10) according to any one of claims 1 to 3, further comprising:
a breather device (104) that, when a value of pressure within the motor chamber (A1) is equal to or greater than a predetermined value, opens the motor chamber (A1) to an atmosphere.

5. The electric vehicle drive system (10) according to any one of claims 1 to 4, wherein
the electric vehicle drive system (10) is a single shaft type of drive system in which the electric motor (18) and the transmission device (22) that transmit power from a drive power source of the electric vehicle drive system to an output member of the electric vehicle drive system are each disposed on a common shaft center (C).

6. The electric vehicle drive system (10) according to any one of claims 1 to 5, wherein
the rotation member (86) is provided on the output shaft (52) of the electric motor (18) so as to be rotatable together with the output shaft (52).

7. The electric vehicle drive system (10) according to any one of claims 1 to 6, wherein
the predetermined clearance (s), a rotational speed of the rotation member (86), a clearance between the first communication hole (98) and a rotating body (54) that is connected to the output shaft (52) of the electric motor (18) within the motor chamber (A1), and a rotational speed of the rotating body (54) are set such that oil is moveable from the motor chamber (A1) into the gear chamber (A2).

## Patentansprüche

1. Elektrisches Fahrzeugantriebssystem (10), bei dem sich ein Elektromotor (18) innerhalb einer Motorkammer (A1) befindet, die von einer Getriebekammer (A2) durch eine Trennung (40) innerhalb eines Gehäuses (24) getrennt wird, und eine Übertragungseinrichtung (22), die Leistung von dem Elektromotor (18) an eine Achse (20) überträgt, befindet sich innerhalb der Getriebekammer (A2), aufweisend:
ein Rotationselement (86), das sich in einem vorgegebenen Abstand (s) von der Trennung (40) innerhalb der Getriebekammer (A2) befindet und das mit einer Ausgangswelle (52) des Elektromotors (18) verbunden ist, und das in Übereinstimmung mit einer Drehung des Elektromotors (18) drehbar ist, wobei die Trennung (40) eine erste Verbindungsöffnung (98) aufweist, die an einer Position ausgebildet ist, die sich in einer radialen Richtung radial innen von einem äußersten Punkt des Rotationselements (86) befindet, und die eine solche Verbindung zwischen der Getriebekammer (A2) und der Motorkammer (A1) darstellt, dass sich Öl von der Motorkammer (A1) in die Getriebekammer (A2) bewegen kann, **dadurch gekennzeichnet, dass**:
die Trennung (40) eine zweite Verbindungsöffnung (100) aufweist, die an einer Position ausgebildet ist, die sich in der radialen Richtung radial außen von dem äußersten Punkt des Rotationselement (86) befindet, und die eine Verbindung zwischen der Getriebekammer (A2) und der Motorkammer (A1) darstellt;
die Trennung (40) weist ein Ölblockadeelement (102) auf, das sich im Verhältnis zu dem Rotationselement (86) an einer radial-äußeren Position befindet, so dass es von einer im Verhältnis zu der zweiten Verbindungsöffnung (100) radial-inneren Position in die Getriebekammer (A2) hineinragt, und das Öl, das aufgrund einer Zentrifugalkraft des Rotationselements (86), das sich dreht, von dem Rotationselement (86) aus radial nach außen geschleudert wird, und sich in Richtung der zweiten Verbindungsöffnung (100) bewegt, blockiert, bevor das Öl die zweite Verbindungsöffnung (100) erreicht.

2. Elektrisches Fahrzeugantriebssystem (10) nach Anspruch 1, wobei sich die erste Verbindungsöffnung (98) an einer Position befindet, die sich in einer Rotationsrichtung des Rotationselements (86) vor der zweiten Verbindungsöffnung (100) befindet.

3. Elektrisches Fahrzeugantriebssystem (10) nach Anspruch 2, wobei sich die zweite Verbindungsöffnung (100) an einer Position befindet, die sich im Verhältnis zu einem Wickelkopf eines Stators (56) des Elektromotors (18) radial außen befindet.

4. Elektrisches Fahrzeugantriebssystem (10) nach einem der Ansprüche 1 bis 3, ferner aufweisend:
eine Entlüftungseinrichtung (104), die, wenn ein Druckwert innerhalb der Motorkammer (A1) einem vorgegebenen Wert gleicht oder diesen übersteigt, die Motorkammer (A1) zu einer Atmosphäre hin öffnet.

5. Elektrisches Fahrzeugantriebssystem (10) nach einem der Ansprüche 1 bis 4, wobei
das elektrische Fahrzeugantriebssystem (10) ein Einzelwellen-Antriebssystem ist, bei dem sich der Elektromotor (18) und die Übertragungseinrichtung (22), die Leistung von einer Antriebsleistungsquelle des elektrischen Fahrzeugantriebssystems an ein Ausgangselement des elektrischen Fahrzeugantriebssystems übertragen, jeweils an einer gemeinsamen Wellenmitte (C) befinden.

6. Elektrisches Fahrzeugantriebssystem (10) nach einem der Ansprüche 1 bis 5, wobei
sich das Rotationselement (86) an der Ausgangswelle (52) des Elektromotors (18) befindet, so dass es zusammen mit der Ausgangswelle (52) drehbar ist.

7. Elektrisches Fahrzeugantriebssystem (10) nach einem der Ansprüche 1 bis 6, wobei
der vorgegebene Abstand (s), eine Rotationsgeschwindigkeit des Rotationselements (86), ein Abstand zwischen der ersten Verbindungsöffnung (98) und einem Rotationskörper (54), der mit der Ausgangswelle (52) des Elektromotors (18) innerhalb der Motorkammer (A1) verbunden ist, und eine Rotationsgeschwindigkeit des Rotationskörpers (54) so eingestellt sind, dass sich Öl von der Motorkammer (A1) in die Getriebekammer (A2) bewegen kann.

## Revendications

1. Système d'entraînement de véhicule électrique (10) dans lequel un moteur électrique (18) est logé à l'intérieur d'une chambre de moteur (A1) qui est séparée d'une chambre d'engrenage (A2) par une cloison (40) à l'intérieur d'un carter (24), et un dispositif de transmission (22) qui transmet de la puissance à partir du moteur électrique (18) à un essieu (20) est logé à l'intérieur de la chambre d'engrenage (A2), comprenant :
un élément de rotation (86) qui est disposé à l'écart de la cloison (40) avec un jeu prédéterminé (s) à l'intérieur de la chambre d'engrenage (A2), et relié à un arbre de sortie (52) du moteur électrique (18), et pouvant tourner conformément à une rotation du moteur électrique (18), dans lequel
la cloison (40) a un premier trou de communication (98) qui est formé au niveau d'une position radialement vers l'intérieur du point le plus à l'extérieur de l'élément de rotation (86) dans un sens radial, et qui fournit une communication entre la chambre d'engrenage (A2) et la chambre de moteur (A1) de telle manière que l'huile puisse circuler à partir de la chambre de moteur (A1) vers la chambre d'engrenage (A2), **caractérisé en ce que** :
la cloison (40) a un deuxième trou de communication (100) qui est formé au niveau d'une position radialement vers l'extérieur du point le plus à l'extérieur de l'élément de rotation (86) dans le sens radial, et qui fournit une communication entre la chambre d'engrenage (A2) et la chambre de moteur (A1) ;
la cloison (40) a un élément de bloc d'huile (102) qui est prévu au niveau d'une position radialement vers l'extérieur de l'élément de rotation (86) de manière à faire saillie à l'intérieur de la chambre d'engrenage (A2) à partir d'une position radialement vers l'intérieur du deuxième trou de communication (100), et qui bloque l'huile qui est projetée radialement vers l'extérieur de l'élément de rotation (86) grâce à une force centrifuge de l'élément de rotation (86) qui est en rotation et se dirigeant vers le deuxième trou de communication (100), avant que l'huile n'atteigne le deuxième trou de communication (100).

2. Système d'entraînement de véhicule électrique (10) selon la revendication 1, dans lequel
le premier trou de communication (98) est formé au niveau d'une position à l'avant du deuxième trou de communication (100) dans un sens de rotation de l'élément de rotation (86).

3. Système d'entraînement de véhicule électrique (10) selon la revendication 2, dans lequel
le deuxième trou de communication (100) est formé au niveau d'une position radialement vers l'extérieur d'une extrémité de bobine d'un stator (56) du moteur électrique (18).

4. Système d'entraînement de véhicule électrique (10) selon l'une quelconque des revendications 1 à 3, comprenant en outre :
un dispositif aérateur (104) qui, lorsqu'une valeur de pression à l'intérieur de la chambre de moteur (A1) est supérieure ou égale à une valeur prédéterminée, ouvre la chambre de moteur (A1) à l'atmosphère.

5. Système d'entraînement de véhicule électrique (10) selon l'une quelconque des revendications 1 à 4, dans lequel
le système d'entraînement de véhicule électrique (10) est un système d'entraînement de type à arbre unique dans lequel le moteur électrique (18) et le dispositif de transmission (22) qui transmet de la puissance à partir d'une source de puissance d'entraînement du système d'entraînement de véhicule électrique à un élément de sortie du système d'entraînement de véhicule électrique sont disposés chacun sur un centre d'arbre commun (C).

6. Système d'entraînement de véhicule électrique (10) selon l'une quelconque des revendications 1 à 5, dans lequel
l'élément de rotation (86) est prévu sur l'arbre de sortie (52) du moteur électrique (18) de manière à pouvoir tourner conjointement avec l'arbre de sortie (52).

7. Système d'entraînement de véhicule électrique (10) selon l'une quelconque des revendications 1 à 6, dans lequel
le jeu prédéterminé (s), une vitesse de rotation de l'élément de rotation (86), un jeu entre le premier trou de communication (98) et un corps rotatif (54) qui est relié à l'arbre de sortie (52) du moteur électrique (18) à l'intérieur de la chambre de moteur (A1), et une vitesse de rotation du corps rotatif (54) sont réglés de sorte que l'huile puisse circuler à partir de la chambre de moteur (A1) vers la chambre d'engrenage (A2).
